# EUROPEAN PATENT APPLICATION

(11) **EP 1 793 529 A1**
(43) Date of publication of application: **06.06.2007**
(21) Application number: 06301203.3
(22) Date of filing: 01.12.2006
(51) Int. Cl.: H04L 12/24

(54) **A method and system for configuring network devices through an operations support system interface**

(30) Priority: 01.12.2005 US 290452
(71) Applicant: Alcatel Lucent, 75008 Paris (FR)
(72) Inventor: Bolder, Ronald, Ottawa Ontario K2G 6V2 (CA); Awad, Yasser, Kanata Ontario K2W 1G6 (CA); Vandette, Chantal, Kanata Ontario K2K 2R7 (CA)
(74) Representative: Hervouet, Sylvie

(57) **Abstract**

A method for configuring an entity in a communications network through an operations support system interface ("OSSI"), comprising: establishing an object for the entity in the interface of a data processing system, the object having at least one attribute derived from a script template for the entity; receiving at least one parameter for the at least one attribute through the interface from an external system; populating the script template with the at least one parameter to generate a command script for performing a configuration task on the entity; sending the command script to the entity for execution; and, notifying the external system through the interface when an execution response from the entity is available and sending the execution response to the external system.

## Description

### FIELD OF THE INVENTION

This invention relates to the field of network management, and more specifically, to a method and system for configuring managed entities such as routers in a communications network using configuration templates and an operating support system interface.

### BACKGROUND OF THE INVENTION

The telecommunications management network ("TMN") provides a framework for achieving interconnectivity and communication across heterogeneous operating systems and telecommunications networks. TMN is defined in the International Telecommunications Union ("ITU") Telecommunications Services Sector ("ITU-T") M.3000 recommendation series (which are incorporated herein by reference). When telecommunications networks implement the TMN definitions, they become interoperable, even when interacting with the networks and equipment of other telecommunications service providers.

TMN uses object-oriented principles and standard interfaces to define communication between management entities in a network. TMN architecture and interfaces, defined in the ITU M.3000 recommendation series, build on existing open systems interconnection ("OSI") standards (which are incorporated herein by reference). These standards include the Common Management Information Protocol ("CMIP") which is a network monitoring and control standard which defines management services exchanged between peer entities. Other standards include the Guideline for Definition of Managed Objects ("GDMO") which provides templates for classifying and describing managed resources, the Abstract Syntax Notation 1 ("ASN.1") which provides syntax rules for data types, and the Open Systems Interconnect Reference Model which defines the seven-layer OSI reference model. (All of the preceding standards and protocols are incorporated herein by reference.)

Thus, TMN is based on the OSI management framework and uses an object-oriented approach, with managed information in network resources modeled as attributes in managed objects. Management functions are performed by operations comprised of Common Management Information Service ("CMIS") primitives. A network's managed information, as well as the rules by which that information is presented and managed, is referred to as the Management Information Base ("MIB"). Processes that manage the information are called "management entities". A management entity can take on one of two possible roles: "manager" or "agent". Manager and agent processes send and receive requests and notifications using the CMIP.

A central concept to understanding the operation of TMN is found in the area of object-oriented systems. The OSI Management Information Structure (frequently referred to as the Structure of Managed Information ("SMI")) is based on collections of objects, some defined in the ISO X.720 series of standards (which are incorporated herein by reference), others that can be found in the TMN M.3100 standards, along with application specific objects that describe the behaviour and offer control points for the specific managed systems. CMIP based MIBs are a collection of managed objects that contain attributes, exhibit some behaviours, can be created and deleted, and may optionally provide application specific actions that a manager can request. Each object can be viewed as possessing a certain set of behaviours, attributes, and actions. The behaviour of an object is directly related to the resource that it represents. For example, a termination point may exhibit the behaviours associated with its relationship with other system components. Attributes contained in an object describe the state and condition of the objects behaviour. Continuing with the termination point as an example, attributes can include references to other objects with which the termination point interacts such as a trail. Actions are services that the object can provide at the request of the management system. The templates for an object's behaviour are defined with GDMO and ASN.1 for TMN. As objects are identified by the management system agent or manager, objects are instantiated (another term for created). Each class of objects defined in the MIB can be instantiated as many times as the equipment and environment warrant.

Object-oriented system concepts that are applied to the CMIP objects include containment, inheritance, and allomorphism. In particular:
1. Containment refers to the characteristic of objects being a repository of other objects and or attributes. For example, a high-level object for a communications switch can contain several racks of equipment, each of which in turn can contain several slots for cards.
2. Inheritance refers to the ability to define an object class that is used as the basis for deriving additional classes. For example, one might use the M.3100 base class for a circuit pack to define the general features of modules within a communications switch. Object classes can then in turn be defined to represent the specific modules. Items including line interface cards, switching elements and processors can be derived from the basic circuit pack definition. Each of these objects exhibits the behavior, actions, and attributes of both the derived classes and the base class.
3. Allomorphism is a concept coined by the CMIP standards bodies to refer to the ability to interact with modules through a base set of interfaces, only to have the resulting behaviours coupled to the complete class definition. For example, disabling a power supply may have significantly different behaviour than disabling a switching component.

As in any data intensive system, information must be maintained in some schema with which users (typically management systems) can access the information. Within the OSI management schema, there are three types of relationships between managed objects as follows:
1. Inheritance Tree - defines the managed object class super and sub-classes, much as C++ base and derived classes are related. When a class is inherited from a super class, it possesses all of the characteristics of the super-class, with additional class specific extensions (additional attributes, behaviors and actions);
2. Containment Tree - defines which managed objects are contained in other managed objects. For example, a sub-network can contain several Managed Elements ("ME"); and,
3. Naming Tree - defines the way in which individual objects are referenced within the constraints of the management architecture.

As in the case of other object-oriented systems, inheritance provides an ability to define general, common information in base classes, and define more specific behaviours and attributes in the derived classes. As each more specific class type is added to the inheritance tree, the derived class adds information more specific to the type of object represented. For example, a multi-point connection may add information describing the specific connection points being included in the connection.

Containment is a feature that allows managed objects to "contain" other managed objects within the system. For example, a packet switch may contain several shelves of equipment, each of which in turn contains one or more circuit packs. The containment relationship is a convenient mechanism to segment the organization of the managed systems information. The containment mechanism is realized through the inclusion of the subordinate (contained) object's object identifier in the superior (containing) class. The object identifiers are stored as attributes within the superior class. Only one superior object can contain any single subordinate managed object, enforcing that the MIB containment be realized through a tree (e.g., a Managed Information Tree ("MIT")) structure.

One of the challenges in implementing CMIP based systems is in the naming, or identification of the objects within the system. Objects can be referenced through a variety of names, a Relative Distinguished Name ("RDN"), a Distinguished Name ("DN", sometimes referred to as the Full Distinguished Name, or "FDN"), and a Local Distinguished Name ("LDN"). The RDN, identifies the object within the constraints of its superior (containing object), uniquely identifying the object within the parent object. The DN (or FDN) is the sequence of the RDN starting at the top of the global system root. The DN uniquely identifies the object within the global containment tree. Finally, the LDN is expressed as a sequence of RDN starting at the local system's root.

With respect to object composition, managed objects are composed of several items. Base classes are defined with the referenced class being "derived from" the parent classes. At the most basic level, each managed object can include the following:
1. Attributes - that contain values describing the state of the object, or that reference contained objects;
2. Behaviours - represent the types of behaviour that the managed object will exhibit. This is currently expressed in the GDMO as text. The managed device will typically implement this in the manner appropriate to its role within the system;
3. Actions - services provided by the managed object that can be activated on the request of the management system;
4. Notifications - messages that can be originated by the managed object on the occurrence of system events; and,
5. Packages - collections of attributes, behaviors, actions, and notifications that can be grouped into one or more managed object class specifications.

When accessing managed objects, these parameters are the points of reference used by the CMIP managers. Access to managed information in the managed objects is provided by the Common Management Information Service Element ("CMISE") that uses CMIP to issue requests for management services. The management services provided by CMIP/CMISE can be organized into two distinct groups, management operation services initiated by a manager to request that an agent provide certain services or information, and notification services, used by the management agents to inform the managers that some event or set of events have occurred.

Similar to CMIP, the Common Object Request Broker Architecture ("CORBA"), which is incorporated herein by reference, is an open distributed object infrastructure defined by the Object Management Group ("OMG"). OMG is an industrial consortium that, among other things, oversees the development and evolution of CORBA standards and their related service standards through a formal adoption process. CORBA standardizes and automates many common network programming tasks such as object implementation, registration, and location transparency. CORBA also defines standard language mappings of most popular languages for the programming interfaces to services provided by the Object Request Broker ("ORB"). An ORB is the basic mechanism by which objects transparently make requests to and receive responses from other objects on the same machine or across a network.

Now, a modern communications network (e.g., an Internet Protocol ("IP") based network) may include a number of network devices (e.g., routers) represented by managed objects. The network devices may be provided by a number of different manufacturers. In addition, the communications network may have a number of Network Management Systems ("NMS") for configuring (and provisioning, controlling, monitoring, etc.) the network devices. For example, the communications network may have first and second NMSs for first and second groups of network devices provided by first and second manufacturers, respectively. In turn, each NMS may be configured by one or more Operations Support Systems ("OSS"). Typically, an OSS is operated by a telecommunications service provider such as a local telephone company. Each OSS may be CMIP based or CORBA based. In such a system, each NMS will typically have an interface ("OSSI") for each protocol (i.e., CMIP, CORBA, etc.) used by its related OSSs.

The CMIP/CORBA OSSI is a standardized interface for use by network operators or service providers to provision the devices in their networks. The OSSI specifies the use of standardized object models to perform provisioning of corresponding network devices. However, one problem with such OSSIs is that they cannot be used to configure a new network device for which a standard object model has not yet been defined. This is problematic as the time required to reach agreement on and implement a standard object model using CMIP/CORBA can be significant. The delay in configuring such new network devices in turn causes a delay in the ongoing improvement of communications networks.

A need therefore exists for an improved method and system for configuring devices in communications networks. Accordingly, a solution that addresses, at least in part, the above and other shortcomings is desired.

### SUMMARY OF THE INVENTION

According to one aspect of the invention, there is provided a method for configuring an entity in a communications network, comprising: establishing an object for the entity in an interface of a data processing system, the object having at least one attribute derived from a script template for the entity; receiving at least one parameter for the at least one attribute through the interface from an external system; populating the script template with the at least one parameter to generate a command script for performing a configuration task on the entity; sending the command script to the entity for execution; and, notifying the external system through the interface when an execution response from the entity is available and sending the execution response to the external system.

The method may further include providing the object to the external system through the interface. The method may further include storing the object in a database in the interface. The entity may be a managed entity. The managed entity may be a router. The data processing system may be a network management system ("NMS"). The external system may be an operations support system ("OSS"). The interface may be an operations support system interface ("OSSI"). The method may further include modeling the object in accordance with a predetermined protocol. The predetermined protocol may be one of the common management information protocol ("CMIP") and the common object request broker architecture ("CORBA"). The database may be a management information base ("MIB"). The command script may include at least one command line interface ("CLI") command. The object may have at least one of a name, at least one action, and at least one behaviour, derived from the script template for the entity. And, the communications network may be an Internet Protocol ("IP") based network.

In accordance with further aspects of the present invention there is provided an apparatus such as a data processing system (e.g., a NMS), a method for adapting this system, as well as articles of manufacture such as a computer readable medium having program instructions recorded thereon for practising the method of the invention.

### BRIEF DESCRIPTION OF THE DRAWINGS

Further features and advantages of the embodiments of the present invention will become apparent from the following detailed description, taken in combination with the appended drawings, in which:

FIG. 1 is a block diagram illustrating a communications network (e.g., an IP based network, etc.) adapted to implement an embodiment of the invention;

FIG. 2 is a block diagram illustrating a data processing system adapted to implement an embodiment of the invention;

FIG. 3 is a schematic diagram illustrating a script management system in accordance with an embodiment of the invention; and,

FIG. 4 is a flow chart illustrating operations of software modules within the memory of a data processing system for configuring an entity in a communications network, in accordance with an embodiment of the invention.

It will be noted that throughout the appended drawings, like features are identified by like reference numerals.

### DETAILED DESCRIPTION OF THE PREFERRED EMBODIMENTS

In the following description, details are set forth to provide an understanding of the invention. In some instances, certain software, circuits, structures and techniques have not been described or shown in detail in order not to obscure the invention. The term "data processing system" is used herein to refer to any machine for processing data, including the communication systems, computer systems, network devices, and network arrangements described herein. The present invention may be implemented in any computer programming language provided that the operating system of the data processing system provides the facilities that may support the requirements of the present invention. Any limitations presented would be a result of a particular type of operating system or computer programming language and would not be a limitation of the present invention.

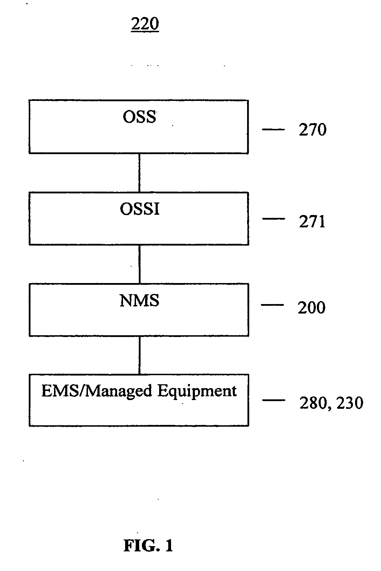

FIG. 1 is a block diagram illustrating a communications network 220 (e.g., an IP based network, etc.) adapted to implement an embodiment of the invention. The communications network 220 includes an number of network devices (e.g. routers) or managed entities/equipment 230. Each network device 230 may be coupled to at least one associated element management system ("EMS") 280 for configuring (and provisioning, controlling, monitoring, etc.) the network device 230. The EMS 280 may be resident in the device 230. Each EMS 280 and/or network device 230 is coupled to at least one associated network management system ("NMS") 200 for configuring (and provisioning, controlling, monitoring, etc.) each EMS 280 /network device 230. In turn, each NMS 200 is coupled to at least one Operations Support System ("OSS") 270. Each OSS 270 may be CMIP based, CORBA based, etc. Each NMS 200 has an OSS interface ("OSSI") 271 for each protocol (i.e., CMIP, CORBA, etc.) used by its related OSSs 270. The OSSI 271 allows for integration of the NMS 200 and its devices 230 with external applications resident on the OSS 270 thereby effectively extending the boundaries of the network 220.

The OSSI 271 is a standardized interface for use by network operators or service providers (using an OSS 270) to configure the devices 230 in their networks 220. The OSSI 271 specifies the use of standardized object models (e.g., CMIP, CORBA, etc.) to configure corresponding network devices 230. However, as mentioned above, one problem with prior OSSIs is that they can not be used to configure a new network device 230, for which a standard object model has not yet been defined. This is problematic as the time required to reach agreement on and implement a standard object model using CMIP/CORBA can be significant. The delay in configuring such new network devices in turn causes delays in the ongoing improvement of communication networks.

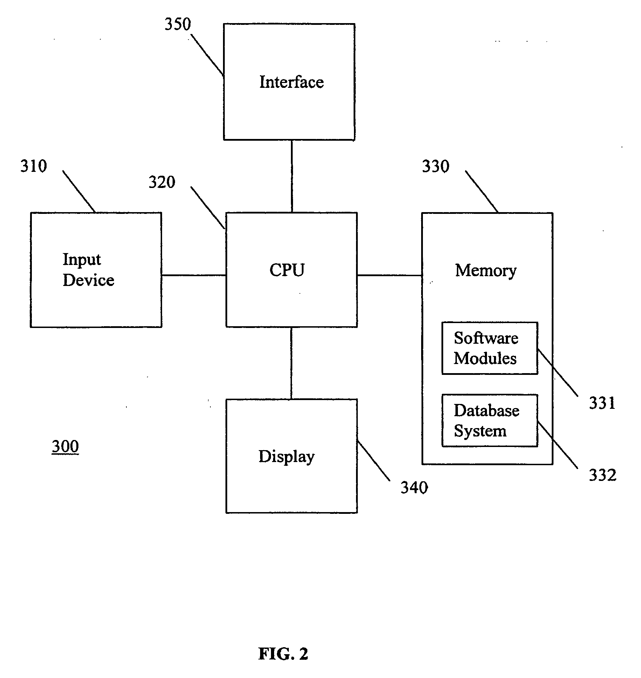

FIG. 2 is a block diagram illustrating a data processing system 300 adapted to implement an embodiment of the invention. The data processing system 300 is suitable for operation as a NMS 200, OSS 270, EMS 230, or network device 230 in a communications network (e.g., 220) such as an IP based network. The data processing system 300 includes a central processing unit ("CPU") 320, memory 330, and an interface device 350 and may optionally include an input device 310 and a display 340. The CPU 320 may include dedicated coprocessors and memory devices. The memory 330 may include RAM, ROM, disk devices, and databases. The interface device 350 may include a network connection (e.g., an IP based network connection). The input device 310 may include a keyboard, a mouse, a trackball, or a similar device. And, the display 340 may include a computer screen, terminal device, or a hardcopy producing output device such as a printer or plotter. The data processing system 300 is adapted for communicating with other data processing systems (270, 280, 200, 230) over a network 220 via the interface device 350. The data processing system 300 may include a database system 332 for storing and accessing network topology and programming information. The database system 332 may include a database management system ("DBMS") and a database and is stored in the memory 330 of the data processing system 300. The data processing system 300 has stored therein data representing sequences of instructions which when executed cause the method described herein to be performed. Of course, the data processing system 300 may contain additional software and hardware a description of which is not necessary for understanding the invention.

Thus, the data processing system 300 includes computer executable programmed instructions for directing the system 300 to implement the embodiments of the present invention. The programmed instructions may be embodied in one or more software modules 331 resident in the memory 330 of the data processing system 300. Alternatively, the programmed instructions may be embodied on a computer readable medium (such as a CD disk or floppy disk) which may be used for transporting the programmed instructions to the memory 330 of the data processing system 300. Alternatively, the programmed instructions may be embedded in a computer-readable, signal-bearing medium that is uploaded to a network by a vendor or supplier of the programmed instructions, and this signal-bearing medium may be downloaded through an interface (e.g., 350) to the data processing system 300 from the network by end users or potential buyers.

Each OSSI 271 of the NMS 200, for example, is typically stored in the memory 330 of the NMS 200 as one or more software modules 331. Communications between the NMS 200 and an OSS 270 takes place using the OSSI 271 and the interface 350.

According to one embodiment, the network device (i.e., managed equipment) 230 is a router. According to this embodiment, the router 230 may be an Open Systems Interconnect ("OSI") Layer-3 ("L3") communications network entity that directs packets between source communications network nodes and destination communications network nodes in packet-switched communications networks (e.g., 220). The communications network 220 may have a large number of routers 230 of various makes, types and software releases.

Each router 230 may be configured using Command Line Interface ("CLI") commands. Unfortunately CLI command sets are not standardized and may even vary across a single vendor's equipment portfolio. As a result, a lot of resources may be expended in training network management personnel to be adept at configuring any and all router makes and types.

To alleviate the problem of configuring routers 230, the operators of the communications network 220 may employ a group of highly trained analysts to write full equipment configuration CLI scripts for each one of a variety of L3 equipment employed in the network 220. Such complex CLI scripts are then made available to less highly trained personnel, at least with respect to CLI configuration of L3 equipment, who execute the scripts on the various L3 equipment as these are required to be configured. Although this approach reduces configuration costs by utilizing the highly trained analyst's expertise only for CLI script creation, it has a disadvantage in terms of script re-use. Specifically, entire CLI scripts must often be customized, by highly trained analysts who are familiar with software release specific CLI command sets/parameters, because typically some of the CLI commands employed are, and have parameters that are, software release specific. Manually customizing the entire CLI scripts for each router software release is not the most efficient way to re-use the CLI scripts as it is time consuming and error prone.

An alternative to using scripts is to fully model a router and associated L3 objects such as, but not limited to: interfaces, routing protocols, and Internet Protocol (IP) links, etc. associated therewith; and then use a NMS 200 to configure the modeled routers 230 and objects associated therewith. This approach suffers from a disadvantage of not allowing for easy configuration of new managed objects because to model the new managed objects and their interactions requires changes to the software run by the NMS 200.

Modifying NMS software to support the introduction of new managed objects via updated router operating software releases of various routing equipment vendors at various times, is time-consuming and costly because of the workload required to implement such changes, testing and distribution of the updated NMS software. Furthermore, desiring to keep the number of NMS software updates to a manageable level would mean that there would always be a lengthy time lag in providing support for the new managed objects between the introduction of the new managed objects by router equipment vendors and those supported by the NMS 200.

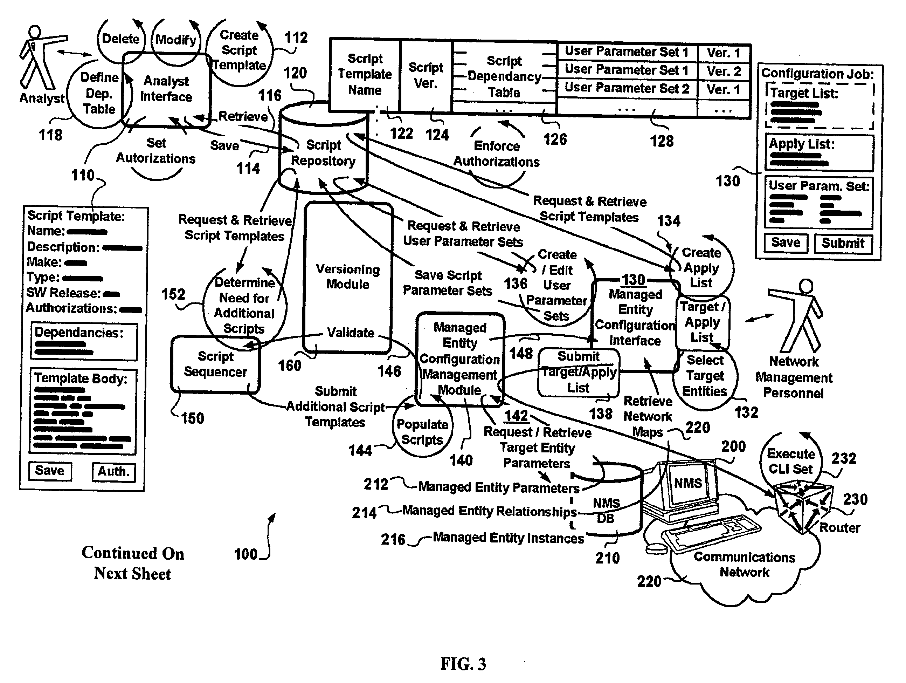

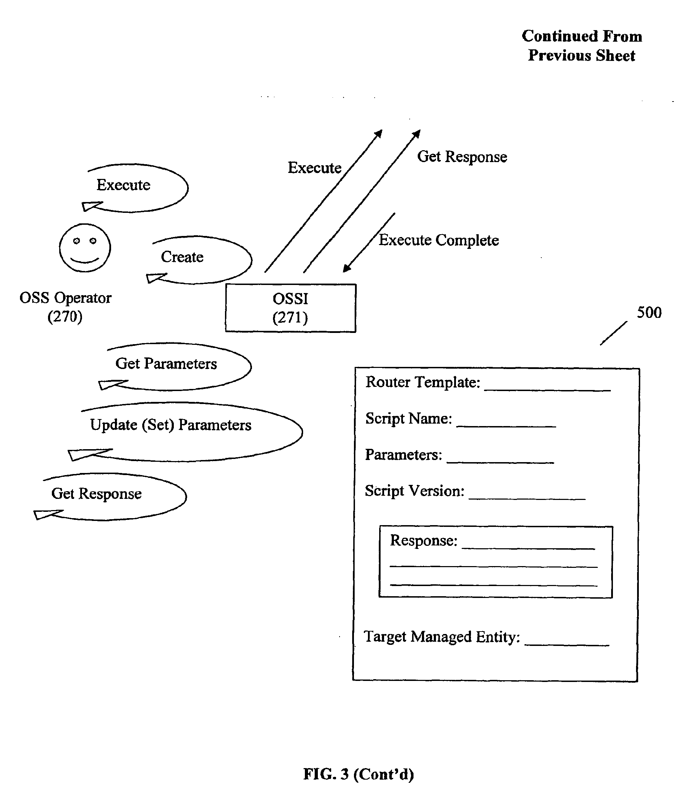

FIG. 3 is a schematic diagram illustrating a script management system 100 in accordance with an embodiment of the invention. The script management system 100 performs operations on parameterized CLI script templates 122 to generate managed entity target specific scripts. The script management system 100 may be resident in the memory 330 of a NMS 200. Operational simplifications are provided in configuring CLI command configurable managed entities 230 (e.g., routers) in a managed communications network 220 wherein network management personnel are provided with a communications network managed entity CLI configuration means which does not require extensive knowledge of CLI commands.

An analyst is provided with an interface, such as but not limited to, a Graphical User Interface ("GUI") 110 which enables the analyst to create 112, save 114, retrieve 116, modify, delete, etc. specific discrete parameterized CLI command script templates 122, as well to define script execution dependencies 118, and perhaps to define execution authorization contexts.

The script management system 100 processes parameterized script templates into command scripts. The parameterized script templates may be written employing other types of (interface command) languages such as, but not limited to: Node Management Terminal Interface ("NMTI"), Transaction Language 1 ("TL1"), extensible Markup Language ("XML"), etc., the specifications of which are incorporated herein by reference.

A script dependency table 126 is associated with each script template 122 to enable proper script ordering in configuring a target managed entity.

Each script template 122 is written to perform a single discrete managed entity configuration task and the corresponding dependency table 126 enables the specification of prerequisite scripts which must be executed before the subject script is executed.

The parameterized CLI command script templates 122 would typically be written by highly trained analysts familiar with respective equipment vendors' CLI command sets. Each CLI command employed in a script template has the following exemplary format: CommandName < UserParamID I valid-range I default-value> / < NMSParamID > ..., where CLI command parameters of the type "User Parameter IDentifier" are intended to be populated 136 by network management personnel prior to submitting 138 the corresponding CLI command script for execution 232 on the corresponding target managed entity 230, with a corresponding value in the "valid range" specified, else the "default value" being employed; and CLI command parameters of the type "NMS Parameter IDentifier" are intended to be populated 144, upon submission 138, with managed entity parameters 212 supplied via a NMS 200 from a NMS DataBase ("DB") 210 as will be described below.

The script management system 100 includes an associated script repository 120 storing parameterized CLI command script templates 122 along with a script version specification 124, a script execution dependency table 126, and user parameter sets 128 each having a version identifier.

Network management personnel are provided with a managed entity configuration GUI 130 for: target entity selection 132 via a network 220 map provided by the NMS 200; requesting and retrieving script templates in creating an apply list 134; creating, storing, requesting, retrieving, editing user parameter sets 136; and, submitting an apply list for execution.

In selecting target entities for configuration, the NMS 200 provides network 220 maps generated from managed entity instances 216 registered with the NMS 200 and relationships 214 therebetween.

This list of script templates 122 selected for managed entity configuration, is hereinafter referred to as an "apply list". The script management system 100 enforces network management personnel authorizations in selecting script templates 122 for inclusion in an apply list. As the script templates 122 in an apply list are populated with valid parameters, the apply list prior to actual transmission for execution 232 on the target managed entity 230 includes an ordered (sequenced) list of actual CLI commands.

Having selected at least one script template 122 for inclusion in an apply list, network management personnel are presented with the opportunity to specify values for user parameters of user parameters sets 128 corresponding to the script template 122. Network management personnel therefore prepare a list of actual CLI commands for execution on a target managed entity 230 without requiring extensive knowledge of the CLI commands.

The user parameters sets 128 can be stored in, and subsequently retrieved (136) from the script repository 120 allowing re-application of scripts using the same user parameter sets 128 at a later time. Multiple versions of user parameter sets 128 may be stored in the script repository 120 for each script template 122. Each apply list is submitted 138 for execution via a managed entity configuration management module 140 of the script management system 100.

In accordance with information held in the dependency tables 126 corresponding to all script templates 122 in a particular apply list, an script sequencer 150 correctly orders (sequences) the resulting CLI command scripts to be executed on target managed entities requesting, retrieving, and inserting 152 any additional prerequisite script templates 122 not initially selected by the network management personnel.

All storage in, and retrievals from, the script repository 120 are brokered 134, 136, 146 and 152 through a versioning module 160 which ensures appropriate script template versions being applied to each target managed entity 230 in accordance with a make, type, and software release thereof, and further ensures appropriate user parameter set versions being used to populate the script templates 122.

In validating 146 a submitted 138 apply list, the managed entity configuration management module 140 in combination with the versioning module 160, in finding a discrepancy, specifically prompt 148 network management personnel to supply user parameter values in respect of inserted script templates 122 and for additional command parameters of an updated CLI command when these are not available in a user parameter set 128 corresponding to a script template 122 previously employed in configuring a corresponding managed entity 232 in accordance with a previous version of the updated CLI command. The versioning functionality enables independent script template 122 modification and ensures the validity of saved user parameter sets 128 being applied to managed entities 232.

Further, when an old version user parameter set 128 is specified for use in respect of an updated corresponding script template 122, the script management system 100: disregards extra user parameters, if any, in the parameter set 128.

Therefore, analysts only need to update relatively short, simple, configuration task specific CLI command script templates 122 with each managed entity software update. Even in respect of an updated managed entity software, network management personnel are provided with means to prepare lists of actual CLI commands for execution on a target managed entity 230 without the network management personnel requiring extensive knowledge of the CLI command sets.

Prior to submitting the apply list for execution, the managed entity configuration management module 140 requests and retrieves 142 target managed entity parameters 212 from the NMS DB 210 associated with the NMS 200 based on NMS ParameterlDs specified and populates 144 each script template 122 in the apply list to generate a custom CLI command script for each specific target managed entity 232.

In the process of validating the apply list, inserting new script templates 122, ordering the script templates 122, populating user parameters with values, populating the NMS parameters with values, requesting user parameter values, the network management personnel is provided, for inspection, with a correctly ordered progressively complete list of CLI commands to be executed in configuring the target managed entity(ies).

In submitting scripts for execution on the target managed entity 230, CLI command sequences specified in scripts having no script execution dependency table entries are submitted for execution first, the rest of the CLI command sequences are submitted only after all prerequisite CLI scripts have been executed in accordance with execute before dependency specifications associated therewith, thereby greatly reducing the extent of CLI configuration knowledge the network management personnel are required to have.

Some CLI script templates 122 in the script repository 120 may have empty script dependency tables 126 and some CLI script templates 122 may include CLI commands not requiring any user parameters and/or NMS parameters to be specified.

Thus, a communications network operator is provided with the means to configure a diverse set of CLI configurable managed entities 230 employed in a corresponding managed communications network 220 at reduced cost. Furthermore, the communications network operator can configure new managed entities and features more quickly than employing NMS-based approaches without requiring managed entity modeling to provide support for the new features in that an analyst need only change and/or add a specific CLI script template 122 in respect of the new managed entity and/or feature. Managed entity diversity in the communications network 220 is addressed via the versioning functionality regardless of whether the diversity is found in the make of the managed equipment 230, the type, and/or the software release thereof.

Now, the present invention provides a solution to the problem of configuring network devices, such as routers 230, through a CMIP/CORBA OSSI 271. Specifically, the present invention simplifies the configuration process so that OSS operators can configure routers without having to completely model all the router's contained objects across multiple vendors and versions.

In particular, the present invention provides an extension to the script management system 100 described above to provide access to router script templates 122 through an OSSI 271. Advantageously, this allows an operator (or application) of an OSS 270 to select a router script template 122 to configure a router 230 that does not yet have standardized object models defined for it, and execute the template 122 on the selected router 230 by providing the required parameter values. This may be implemented by an administrator (or application) of an NMS 200 providing access to a router script template 122 for a particular object on a router 230 allowing the operator (or application) of the OSS 270 to configure and execute the router script template 122 on any supported router 230. Recall that an OSS 270 is typically operated by a telecommunications service provider such as a local telephone company. Advantageously, the OSS operator does not require extensive router object modeling to support new routers, new software versions on routers, and routers from multiple vendors. In addition, the OSS operator may gain access through their OSS 270 to the potentially extensive router script template database of the NMS operator's NMS 200 allowing for configuration of router objects across multiple vendors' routers and multiples versions of router software.

The OSSI 271 contains a MIB database where objects are modelled in accordance with standards such as CMIP and CORBA. As described above, each object can be viewed as possessing a certain set of attributes, behaviours, actions, notifications, and packages. The behaviour of an object is directly related to the resource that it represents (e.g., a router). Referring again to FIG. 3, according to the present invention, a router template object 500 is created in the OSSI 271 for a router script template 122 with a given script name. The router template object is then made available to the OSS 270. Through the router template object 500, the operator (or application) of the OSS 270 will receive parameters and default values for configuration. The operator of the OSS 270 configures these parameters and defaults and provides them to the NMS 200 and/or script management system 100. The NMS 200 and/or script management system 100 can then execute the script for the selected router 230.

Thus, a script "template" 122 refers to a collection of CLI commands that may contain metadata that will be used in interpretation of parameters while a "router template" is an association of a template 122 and a router 230 providing values for the parameters identified in the metadata.

With respect to CMIP/CORBA modeling with the NMS 200 and network objects, the "objectGroup" object is used to group "routerTemplate" objects 500. The objectGroup class is created and contained within the network (top level). The routerTemplate object 500 is modeled to allow creation, configuration, deletion and execution of a router template on a "managedElement". The routerTemplate class is created and contained within the objectGroup.

As shown in FIG. 3, the OSSI 271 provides the following exemplary functions to an OSS operator 270 through the router template object 500, NMS 200, and/or script management system 100 for the managed router 230: execute, create, get parameters, update (set) parameters, and get response. The OSSI 271 receives/sends execute, get response, and execute complete messages from/to the NMS 200 and/or script management system 100. The router template object 500 includes a router template name, a script name, parameters, script version, response, and a target managed entity name.

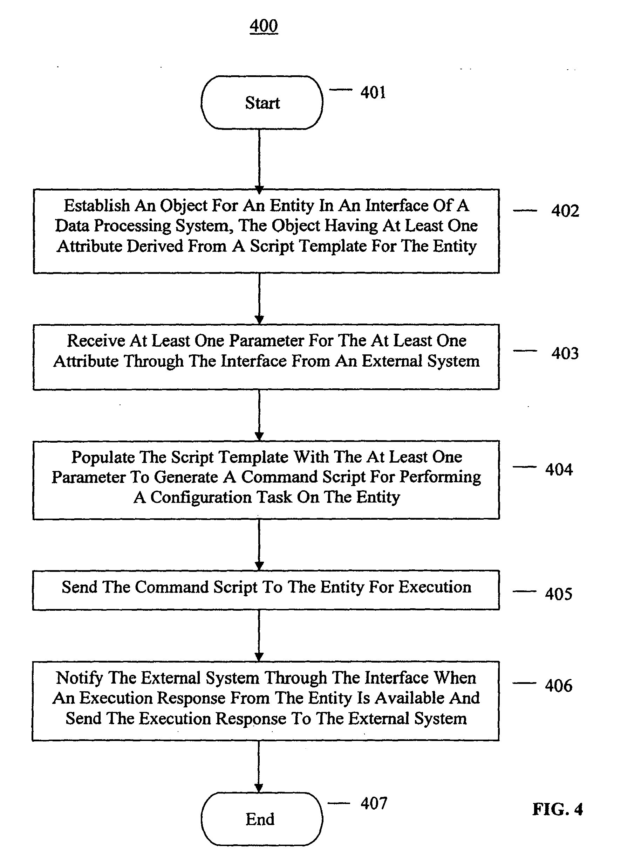

The above described method may be summarized with the aid of a flowchart. FIG. 4 is a flow chart illustrating operations 400 of software modules 331 within the memory 330 of a data processing system 300 for configuring an entity 230 in a communications network 220, in accordance with an embodiment of the invention.

At step 401, the operations 400 start.

At step 402, an object is established for the entity 230 in an interface 271 of a data processing system 300, the object having at least one attribute derived from a script template 122 for the entity 230.

At step 403, at least one parameter for the at least one attribute is received through the interface 271 from an external system 270.

At step 404, the script template 122 is populated with the at least one parameter to generate a command script for performing a configuration task on the entity 230.

At step 405, the command script is sent to the entity 230 for execution.

At step 406, the external system 270 is notified through the interface 271 when an execution response from the entity 230 is available and the execution response is sent to the external system 270.

At step 407, the operations 400 end.

The method may further include providing the object to the external system 270 through the interface 271. The method may further include storing the object in a database in the interface 271. The entity 230 may be a managed entity 230. The managed entity 230 may be a router 230. The data processing system 300 may be a network management system ("NMS") 200. The external system 270 may be an operations support system ("OSS") 270. The interface 271 may be an operations support system interface ("OSSI") 271. The method may further include modeling the object in accordance with a predetermined protocol. The predetermined protocol may be one of the common management information protocol ("CMIP") and the common object request broker architecture ("CORBA"). The database may be a management information base ("MIB"). The command script may include at least one command line interface ("CLI") command. The object may have at least one of a name, at least one action, and at least one behaviour, derived from the script template 122 for the entity 230. And, the communications network 220 may be an Internet Protocol ("IP") based network.

According to one embodiment of the invention, the above described method may be implemented by an OSS 270.

While this invention is primarily discussed as a method, a person of ordinary skill in the art will understand that the apparatus discussed above with reference to a data processing system 300, may be programmed to enable the practice of the method of the invention. Moreover, an article of manufacture for use with a data processing system 300, such as a pre-recorded storage device or other similar computer readable medium including program instructions recorded thereon, may direct the data processing system 300 to facilitate the practice of the method of the invention. It is understood that such apparatus and articles of manufacture also come within the scope of the invention.

In particular, the sequences of instructions which when executed cause the method described herein to be performed by the data processing system 300 of FIG. 2 can be contained in a data carrier product according to one embodiment of the invention. This data carrier product can be loaded into and run by the data processing system 300 of FIG. 2. In addition, the sequences of instructions which when executed cause the method described herein to be performed by the data processing system 300 of FIG. 2 can be contained in a computer software product according to one embodiment of the invention. This computer software product can be loaded into and run by the data processing system 300 of FIG. 2. Moreover, the sequences of instructions which when executed cause the method described herein to be performed by the data processing system 300 of FIG. 2 can be contained in an integrated circuit product including a coprocessor or memory according to one embodiment of the invention. This integrated circuit product can be installed in the data processing system 300 of FIG. 2.

The embodiments of the invention described above are intended to be exemplary only. Those skilled in this art will understand that various modifications of detail may be made to these embodiments, all of which come within the scope of the invention.

## Claims

1. A method for configuring an entity in a communications network, comprising:
establishing an object for the entity in an interface of a data processing system, the object having at least one attribute derived from a script template for the entity;
receiving at least one parameter for the at least one attribute through the interface from an external system;
populating the script template with the at least one parameter to generate a command script for performing a configuration task on the entity;
sending the command script to the entity for execution; and,
notifying the external system through the interface when an execution response from the entity is available and sending the execution response to the external system.

2. The method of claim 1 and further comprising providing the object to the external system through the interface.

3. The method of claim 1 and further comprising storing the object in a database in the interface.

4. The method of claim 1 wherein the entity is a managed entity.

5. The method of claim 4 wherein the managed entity is a router.

6. The method of claim 1 wherein the data processing system is a network management system ("NMS").

7. The method of claim 1 wherein the external system is an operations support system ("OSS").

8. The method of claim 1 wherein the interface is an operations support system interface ("OSSI").

9. The method of claim 1 and further comprising modeling the object in accordance with a predetermined protocol.

10. The method of claim 9 wherein the predetermined protocol is one of common management information protocol ("CMIP") and common object request broker architecture ("CORBA").

11. The method of claim 10 wherein the database is a management information base ("MIB").

12. The method of claim 1 wherein the command script includes at least one command line interface ("CLI") command.

13. The method of claim 1 wherein the object has at least one of a name, at least one action, and at least one behaviour, derived from the script template for the entity.

14. The method of claim 1 wherein the communications network is an Internet Protocol ("IP") based network.

15. A system for configuring an entity in a communications network, comprising:
a processor coupled to memory and to an interface to the communications network, the processor adapted to:
establish an object for the entity in the interface, the object having at least one attribute derived from a script template for the entity;
receive at least one parameter for the at least one attribute through the interface from an external system;
populate the script template with the at least one parameter to generate a command script for performing a configuration task on the entity;
send the command script to the entity for execution; and,
notify the external system through the interface when an execution response from the entity is available and send the execution response to the external system.

16. The system of claim 15 wherein the processor is further adapted to provide the object to the external system through the interface.

17. The system of claim 15 wherein the processor is further adapted to store the object in a database in the interface.

18. The system of claim 15 wherein the entity is a managed entity.

19. The system of claim 18 wherein the managed entity is a router.

20. The system of claim 15 wherein the system is a network management system ("NMS").

21. The system of claim 15 wherein the external system is an operations support system ("OSS").

22. The system of claim 15 wherein the interface is an operations support system interface ("OSSI").

23. The system of claim 15 wherein the processor is further adapted to model the object in accordance with a predetermined protocol.

24. The system of claim 23 wherein the predetermined protocol is one of common management information protocol ("CMIP") and common object request broker architecture ("CORBA").

25. The system of claim 24 wherein the database is a management information base ("MIB").

26. The system of claim 15 wherein the command script includes at least one command line interface ("CLI") command.

27. The system of claim 15 wherein the object has at least one of a name, at least one action, and at least one behaviour, derived from the script template for the entity.

28. The system of claim 15 wherein the communications network is an Internet Protocol ("IP") based network.

29. A computer program product having computer executable code for directing a data processing system to configure an entity in a communications network, the code comprising:
code for establishing an object for the entity in an interface of the data processing system, the object having at least one attribute derived from a script template for the entity;
code for receiving at least one parameter for the at least one attribute through the interface from an external system;
code for populating the script template with the at least one parameter to generate a command script for performing a configuration task on the entity;
code for sending the command script to the entity for execution; and,
code for notifying the external system through the interface when an execution response from the entity is available and code for sending the execution response to the external system.

30. The computer program product of claim 29 and further comprising code for providing the object to the external system through the interface.

31. The computer program product of claim 29 and further comprising code for storing the object in a database in the interface.

32. The computer program product of claim 29 wherein the entity is a managed entity.

33. The computer program product of claim 32 wherein the managed entity is a router.

34. The computer program product of claim 29 wherein the data processing system is a network management system ("NMS").

35. The computer program product of claim 29 wherein the external system is an operations support system ("OSS").

36. The computer program product of claim 29 wherein the interface is an operations support system interface ("OSSI").

37. The computer program product of claim 29 and further comprising code for modeling the object in accordance with a predetermined protocol.

38. The computer program product of claim 37 wherein the predetermined protocol is one of common management information protocol ("CMIP") and common object request broker architecture ("CORBA").

39. The computer program product of claim 38 wherein the database is a management information base ("MIB").

40. The computer program product of claim 29 wherein the command script includes at least one command line interface ("CLI") command.

41. The computer program product of claim 29 wherein the object has at least one of a name, at least one action, and at least one behaviour, derived from the script template for the entity.

42. The computer program product of claim 29 wherein the communications network is an Internet Protocol ("IP") based network.

43. A computer readable signal for directing a data processing system to configure an entity in a communications network, the computer readable signal comprising:
a signal for establishing an object for the entity in an interface of the data processing system, the object having at least one attribute derived from a script template for the entity;
a signal for receiving at least one parameter for the at least one attribute through the interface from an external system;
a signal for populating the script template with the at least one parameter to generate a command script for performing a configuration task on the entity;
a signal for sending the command script to the entity for execution; and,
a signal for notifying the external system through the interface when an execution response from the entity is available and a signal for sending the execution response to the external system.

44. The computer readable signal of claim 43 and further comprising a signal for providing the object to the external system through the interface.

45. The computer readable signal of claim 43 and further comprising a signal for storing the object in a database in the interface.

46. The computer readable signal of claim 43 wherein the entity is a managed entity.

47. The computer readable signal of claim 46 wherein the managed entity is a router.

48. The computer readable signal of claim 43 wherein the data processing system is a network management system ("NMS").

49. The computer readable signal of claim 43 wherein the external system is an operations support system ("OSS").

50. The computer readable signal of claim 43 wherein the interface is an operations support system interface ("OSSI").

51. The computer readable signal of claim 43 and further comprising a signal for modeling the object in accordance with a predetermined protocol.

52. The computer readable signal of claim 51 wherein the predetermined protocol is one of common management information protocol ("CMIP") and common object request broker architecture ("CORBA").

53. The computer readable signal of claim 52 wherein the database is a management information base ("MIB").

54. The computer readable signal of claim 43 wherein the command script includes at least one command line interface ("CLI") command.

55. The computer readable signal of claim 43 wherein the object has at least one of a name, at least one action, and at least one behaviour, derived from the script template for the entity.

56. The computer readable signal of claim 43 wherein the communications network is an Internet Protocol ("IP") based network.
